# DEMANDE DE BREVET EUROPEEN

(11) **EP 2 381 614 A1**
(43) Date de publication de la demande: **26.10.2011**
(21) Numéro de dépôt: 11305483.7
(22) Date de dépôt: 22.04.2011
(51) Int. Cl.: H04L 9/08, H04L 9/12

(54) **Procédé de partage d'une clé de chiffrement/déchiffrement d'informations, système de partage de clé et système de contrôle d'accès mettant en oeuvre ce procédé**

(30) Priorité: 26.04.2010 FR 1053170
(71) Demandeur: Logiways France, 75015 Paris (FR)
(72) Inventeur: Adjedj, Michael, 94380, Bonneuil-sur-Marne (FR)
(74) Mandataire: Blot, Philippe Robert Emile

(57) **Abrégé**

Ce procédé est caractérisé en ce qu'il comporte les étapes suivantes :
- une étape (5) d'établissement dans l'émetteur (1) et ledit au moins un récepteur (2), d'une base de données racine de clé,
- une étape (13) de génération dans l'émetteur (1) d'une séquence de bits appelée indice,
- une étape (14) de transmission de cette séquence de bits d'indice par l'émetteur (1) à destination du récepteur (2), et
- une étape (16, 17) d'extraction par l'émetteur (1) et ledit au moins un récepteur (2), de la clé à partir de l'indice et de la base de données racine de clé.

## Description

La présente invention concerne un procédé de partage d'une clé de chiffrement/déchiffrement d'informations entre un émetteur et au moins un récepteur.

L'invention se rapporte également à un système pour la mise en oeuvre de ce procédé et à un système de contrôle d'accès à des signaux de télévision à péage qui comporte au moins un tel système.

De tels procédés entrent dans le cadre général de ce qui est appelé la cryptologie.

La cryptologie moderne est une science qui emploie diverses techniques utilisant parfois des théories mathématiques complexes, dans le but d'assurer la confidentialité des échanges d'informations.

Dans une transmission d'informations, celles-ci circulent à travers un canal de transmission constitué par exemple par un câble téléphonique, internet, par voie postale, etc.. Ce canal est en général accessible à beaucoup de gens et les informations qui circulent sont susceptibles d'être observées.

Dans le but de garder ces informations secrètes, on fait appel en général à la cryptographie.

Ainsi avant d'être transmises sur un canal de transmission, les informations subissent une transformation, appelée chiffrement, qui les rend incompréhensibles à tout observateur du canal.

A la réception, le destinataire effectue une opération inverse appelée déchiffrement, sensée redonner tout son sens aux informations reçues.

Ces opérations font appel à des clés dont certaines doivent demeurer secrètes. On distingue deux grands types de cryptographie à savoir :
1) la cryptographie à clé secrète, ou symétrique, où les opérations de chiffrement et de déchiffrement utilisent la même clé. Les opérations effectuées dans ce cadre sont en général rapides et nécessitent peu de ressources. Cependant elles présentent un inconvénient majeur en ce qu'une clé secrète est nécessaire pour chaque couple d'utilisateurs souhaitant se communiquer des informations.
2) la cryptographie à clé publique, ou asymétrique, où les opérations de chiffrement et de déchiffrement utilisent des clés différentes, le plus souvent liées par une formule algébrique. Cette technique permet de réduire le nombre de clés nécessaires.

Il existe également des schémas de chiffrement utilisant à la fois des mécanismes symétriques et asymétriques. Ces schémas sont qualifiés d'hybrides.

Dans le cas d'envois groupés chiffrés pour de multiples récepteurs également connus sous le terme anglais de « broadcast encryption », la gestion des clés communes peut poser un certain nombre de problèmes particulièrement lorsque celles-ci doivent être changées.

L'effet indésirable majeur que l'on peut observer est, en fonction de la gestion des utilisateurs, une consommation accrue de la bande passante allouée lors de tout renouvellement de clés.

Ceci est en particulier le cas lorsque pour une raison ou pour une autre, il y a lieu de changer des clés dans des systèmes de contrôle d'accès à des signaux de télévision à péage par exemple.

On conçoit en effet que les abonnés à de tels systèmes se chiffrent par centaines de milliers et que le renouvellement des clés pour chacun de ceux-ci est extrêmement consommateur en terme notamment de bande passante et de temps.

Le but de l'invention est donc de résoudre ces problèmes.

A cet effet, l'invention a pour objet un procédé de partage d'une clé de chiffrement/déchiffrement d'informations entre un émetteur et au moins un récepteur, caractérisé en ce qu'il comporte les étapes suivantes :
- une étape d'établissement dans l'émetteur et ledit au moins un récepteur d'une base de données racine de clé,
- une étape de génération dans l'émetteur d'une séquence de bits appelée indice,
- une étape de transmission de cette séquence de bits d'indice par l'émetteur à destination du récepteur, et
- une étape d'extraction par l'émetteur et ledit au moins un récepteur, de la clé à partir de l'indice et de la base de données racine de clé.

Selon d'autres aspects de l'invention, le procédé de partage comprend l'une ou plusieurs des caractéristiques suivantes :
- l'étape d'établissement de la base de données racine de clé comporte une étape de génération de celle-ci dans l'émetteur et une étape de transmission de celle-ci par l'émetteur à destination du récepteur,
- l'étape de transmission de la base de données racine de clé et/ou l'étape de transmission de la séquence de bits d'indice sont réalisées sur un canal sécurisé entre l'émetteur et le récepteur,
- l'étape d'établissement de la base de données racine de clé comporte :
- une étape de génération dans l'émetteur, d'une séquence d'informations appelée graine,
- une étape de transmission de cette séquence d'informations de graine par l'émetteur à destination du récepteur, et
- une étape de dérivation par l'émetteur et le récepteur à partir de cette séquence d'informations de graine, de la base de données racine de clé.
- l'étape de dérivation par l'émetteur et le récepteur de la base de données de clé met en oeuvre un procédé cryptographique,
- le procédé cryptographique met en oeuvre une fonction de hachage,
- le procédé cryptographique met en oeuvre un générateur pseudo-aléatoire,
- la transmission de la séquence d'informations de graine et/ou la transmission de la séquence de bits d'indice sont réalisées sur un canal sécurisé,
- l'étape d'extraction par l'émetteur et ledit au moins un récepteur, de la clé à partir de l'indice et de la base de données racine de clé est réalisée par un algorithme de dérivation injectif, et
- la séquence de bits d'indice présente une longueur de 32 ou 64 bits et la clé une longueur de 128, 192 ou 256 bits.

L'invention concerne également un système de partage d'une clé de chiffrement/déchiffrement d'informations entre un émetteur et au moins un récepteur pour la mise en oeuvre d'un tel procédé, caractérisé en ce qu'il comporte :
- des moyens d'établissement dans l'émetteur et ledit au moins un récepteur d'une base de données racine de clé,
- des moyens de génération dans l'émetteur d'une séquence de bits appelée indice,
- des moyens de transmission de cette séquence de bits d'indice par l'émetteur à destination du récepteur, et
- des moyens d'extraction par l'émetteur et ledit au moins un récepteur, de la clé à partir de l'indice et de la base de données racine de clé.

L'invention concerne enfin un système de contrôle d'accès à des signaux de télévision à péage, caractérisé en ce qu'il comporte au moins un système de partage d'une clé de chiffrement/déchiffrement d'informations entre un émetteur et au moins un récepteur.

L'invention sera mieux comprise à l'aide de la description qui va suivre donnée uniquement à titre d'exemple et faite en se référant aux dessins annexés sur lesquels :
- la figure 1 illustre un schéma synoptique illustrant un émetteur et des récepteurs entre lesquels sont échangées des informations, et
- la figure 2 représente un ordinogramme illustrant les différentes étapes d'un exemple de réalisation d'un procédé de partage selon l'invention.

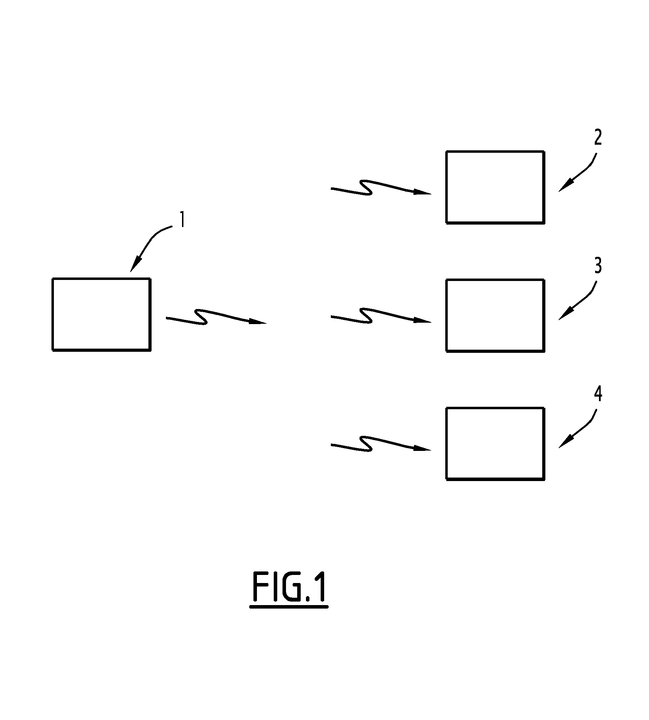

L'invention concerne en effet un procédé de partage d'une clé de chiffrement/déchiffrement d'informations entre un émetteur, désigné par la référence générale 1 sur la figure 1, et au moins un récepteur tel que désigné par la référence générale 2 sur cette figure.

Bien entendu un nombre quelconque de récepteurs peut être envisagé, trois étant représentés sur cette figure et étant désignés par les références générales 2, 3 et 4 respectivement sur cette figure 1.

Ces émetteur et récepteurs sont par exemple intégrés dans un système de partage de clés tel que mis en oeuvre dans un système de contrôle d'accès à des signaux de télévision à péage.

Dans un tel exemple de réalisation, des signaux de télévision sont émis sous une forme chiffrée à l'aide d'une clé, par une tête de réseau.

Les signaux chiffrés sont reçus au niveau de récepteurs, qui utilisent alors une clé de déchiffrement pour récupérer les signaux et les transmettre en clair par exemple à un téléviseur.

On conçoit que dans une telle application, il convient de changer régulièrement les clés, notamment pour adapter les récepteurs à des modifications des abonnements, des résiliations, ... ou en raison de problèmes de piratage, etc ....

Or le nombre de récepteurs concernés c'est-à-dire par exemple le nombre d'abonnés à un tel système se chiffrant en dizaines voire en centaines de milliers, on conçoit que les opérations de renouvellement de ces clés sont fastidieuses et longues, et consomment une bande passante très importante.

En effet de telles clés de chiffrement/déchiffrement peuvent par exemple présenter des longueurs de 128 ou de 256 bits actuellement.

Pour résoudre ces problèmes, la présente invention propose une classe d'algorithmes permettant de manière cryptographique et sûre, de diversifier des clés symétriques de tailles cryptographiques en général d'une longueur de 128, de 192 ou de 256 bits, à partir d'un indice beaucoup plus petit, typiquement de l'ordre de 32 ou 64 bits.

Bien entendu des longueurs différentes peuvent être envisagées selon le mécanisme utilisé.

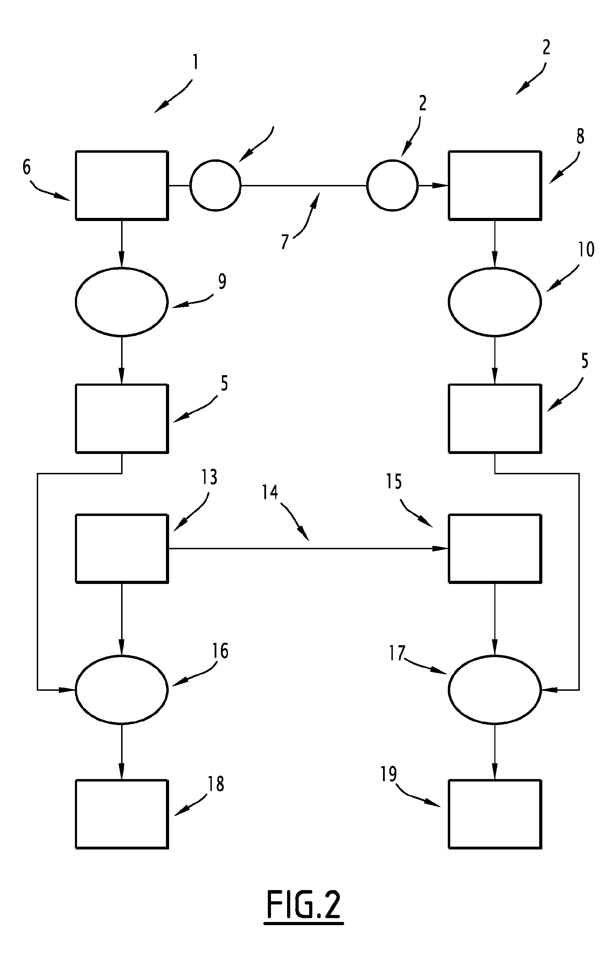

A cet effet et comme cela est illustré sur la figure 2, il convient d'établir dans l'émetteur désigné par la référence générale 1 et le récepteur désigné par la référence générale 2, une base de données racine de clé lors d'une étape désignée par la référence générale 5.

Selon l'exemple de réalisation illustré sur cette figure, cette étape 5 d'établissement dans l'émetteur et le récepteur de cette base de données racine de clé consiste dans un premier temps, dans l'émetteur 1, à générer une séquence d'informations appelée graine, cette étape de génération étant désignée par la référence générale 6 et étant mise en oeuvre par un générateur correspondant.

Ce type de séquence d'informations appelée graine est bien connue dans les procédés cryptographiques.

Cette séquence d'informations de graine est ensuite transmise lors d'une étape 7 par l'émetteur à destination du récepteur 2, celui-ci disposant alors par exemple d'une copie de la séquence d'informations de graine en 8.

L'émetteur et le récepteur mettent ensuite en oeuvre une étape de dérivation à partir de cette séquence d'informations de graine, de la base de données racine de clé.

Ces étapes sont désignées par les références 9 et 10, pour les étapes de dérivation mises en oeuvre par l'émetteur et le récepteur respectivement.

En fait cette étape de dérivation par l'émetteur et le récepteur de la base de données de clés à partir de la séquence de graine, peut mettre en oeuvre un procédé cryptographique en utilisant par exemple de façon classique une fonction de hachage ou encore un générateur pseudo-aléatoire permettant de passer de la graine à la base de données racine de clé de façon classique.

Il est à noter que selon l'exemple de réalisation illustré sur cette figure, la transmission de la séquence de graine entre l'émetteur et le récepteur se fait lors de l'étape 7 sur un canal sécurisé entre ceux-ci.

Ainsi par exemple les informations transmises sur ce canal peuvent être chiffrées en utilisant des moyens de chiffrement et de déchiffrement de type classique respectivement 11 et 12, associés à l'émetteur et au récepteur.

Dans le procédé selon l'invention, il est également prévu une étape de génération dans l'émetteur d'une séquence de bits appelée indice.

Cette étape est désignée par la référence générale 13 sur la figure 2 et cette séquence de bits d'indice peut par exemple présenter une longueur de 32 ou de 64 bits.

Cette séquence de bits d'indice est ensuite transmise par l'émetteur à destination du récepteur, lors de l'étape 14, le récepteur disposant alors en 15, par exemple d'une copie de cette séquence de bits d'indice.

L'émetteur et le récepteur disposent alors chacun d'une base de données racine de clé et d'une séquence de bits d'indice identiques qui sont utilisées pour extraire par cet émetteur et par ce récepteur, la clé de chiffrement/déchiffrement à partir de l'indice et de la base de données racine de clé comme cela est illustré par les étapes 16 et 17 respectivement pour l'émetteur et le récepteur.

Le résultat de cette étape d'extraction est la clé de chiffrement délivrée en 18 pour l'émetteur et de déchiffrement délivrée en 19 pour le récepteur.

L'étape d'extraction 16, 17, mise en oeuvre par l'émetteur et le récepteur, de la clé à partir de l'indice et de la base de données racine de clé, peut être réalisée par exemple par un algorithme de dérivation injectif c'est-à-dire selon lequel deux indices différents donnent deux clés différentes.

On conçoit bien entendu que d'autres modes de réalisation peuvent être envisagés.

Ainsi par exemple sur la figure 2 on a illustré une transmission de la séquence d'informations de graine sur un canal sécurisé c'est-à-dire chiffrée.

Bien entendu la séquence de bits d'indice peut également transmise sur un canal de ce type.

De même sur cette figure on a décrit un mode de réalisation dans lequel la séquence d'informations de graine est transmise de l'émetteur vers le récepteur pour permettre la constitution de la base de données racine de clé dans ce récepteur.

Bien entendu selon un autre exemple de réalisation, cette base de données racine de clé peut être générée uniquement dans l'émetteur et transmise par cet émetteur à destination du récepteur directement, à travers par exemple un canal sécurisé.

On conçoit alors qu'un tel procédé présente un certain nombre d'avantages notamment au niveau de la sécurité accrue du chiffrement des informations et de la facilité de changement des clés.

En effet au lieu d'avoir à transmettre une nouvelle clé de 128, de 192 ou de 256 bits à destination de tous les récepteurs concernés, en remplacement de l'ancienne clé, il suffit à l'émetteur de transmettre à destination de ces récepteurs, la séquence de bits d'indice pour leur permettre de calculer la nouvelle clé.

Or comme cela a été mentionné précédemment, cette séquence de bits d'indice peut être beaucoup plus petite qu'une clé.

En effet et comme cela a été mentionné également, cette séquence d'indice peut par exemple présenter une longueur de 32 ou de 64 bits ce qui est beaucoup plus rapide à transmettre, consomme beaucoup moins de bande passante, etc ..., que la transmission d'une clé à 128, 192 ou 256 bits.

Une augmentation de la fréquence de renouvellement des clés peut alors être envisagée.

Par ailleurs il peut également être envisagé de renouveler la base de données racine de clé. Ceci peut également être réalisé simplement en transmettant une nouvelle graine de l'émetteur vers le récepteur, cette graine présentant également une taille réduite par rapport à la base racine de clé.

Bien entendu d'autres modes de réalisation encore peuvent être envisagés.

## Revendications

1. Procédé de partage d'une clé de chiffrement/déchiffrement d'informations entre un émetteur (1) et au moins un récepteur (2, 3, 4), **caractérisé en ce qu'**il comporte les étapes suivantes :
- une étape (5) d'établissement dans l'émetteur (1) et ledit au moins un récepteur (2, 3, 4), d'une base de données racine de clé,
- une étape (13) de génération dans l'émetteur (1) d'une séquence de bits appelée indice,
- une étape (14) de transmission de cette séquence de bits d'indice par l'émetteur (1) à destination du récepteur (2, 3, 4), et
- une étape (16, 17) d'extraction par l'émetteur (1) et ledit au moins un récepteur (2, 3, 4), de la clé à partir de l'indice et de la base de données racine de clé.

2. Procédé de partage d'une clé de chiffrement/déchiffrement d'informations selon la revendication 1, **caractérisé en ce que** l'étape d'établissement de la base de données racine de clé comporte une étape de génération de celle-ci dans l'émetteur (1) et une étape de transmission de celle-ci par l'émetteur (1) à destination du récepteur (2, 3, 4).

3. Procédé de partage d'une clé de chiffrement/déchiffrement d'informations selon la revendication 2, **caractérisé en ce que** l'étape de transmission de la base de données racine de clé et/ou l'étape de transmission de la séquence de bits d'indice sont réalisées sur un canal sécurisé entre l'émetteur (1) et le récepteur (2, 3, 4).

4. Procédé de partage d'une clé de chiffrement/déchiffrement d'informations selon la revendication 1, **caractérisé en ce que** l'étape d'établissement de la base de données racine de clé comporte :
- une étape (6) de génération dans l'émetteur (1), d'une séquence d'informations appelée graine,
- une étape (7) de transmission de cette séquence d'informations de graine par l'émetteur (1) à destination du récepteur (2, 3, 4), et
- une étape (9, 10) de dérivation par l'émetteur (1) et le récepteur (2, 3, 4) à partir de cette séquence d'informations de graine, de la base de données racine de clé.

5. Procédé de partage d'une clé de chiffrement/déchiffrement d'informations selon la revendication 4, **caractérisé en ce que** l'étape de dérivation par l'émetteur (1) et le récepteur (2, 3, 4) de la base de données de clé met en oeuvre un procédé cryptographique.

6. Procédé de partage d'une clé de chiffrement/déchiffrement d'informations selon la revendication 5, **caractérisé en ce que** le procédé cryptographique met en oeuvre une fonction de hachage.

7. Procédé de partage d'une clé de chiffrement/déchiffrement d'informations selon la revendication 5, **caractérisé en ce que** le procédé cryptographique met en oeuvre un générateur pseudo-aléatoire.

8. Procédé de partage d'une clé de chiffrement/déchiffrement d'informations selon l'une quelconque des revendications 4 à 7, **caractérisé en ce que** la transmission (7) de la séquence d'informations de graine et/ou la transmission (14) de la séquence de bits d'indice sont réalisées sur un canal sécurisé.

9. Procédé de partage d'une clé de chiffrement/déchiffrement d'informations selon l'une quelconque des revendications précédentes, **caractérisé en ce que** l'étape (16, 17) d'extraction par l'émetteur (1) et ledit au moins un récepteur (2, 3, 4), de la clé à partir de l'indice et de la base de données racine de clé est réalisée par un algorithme de dérivation injectif.

10. Procédé de partage d'une clé de chiffrement/déchiffrement d'informations selon l'une quelconque des revendications précédentes, **caractérisé en ce que** la séquence de bits d'indice présente une longueur de 32 ou 64 bits et la clé une longueur de 128, de 192 ou 256 bits.

11. Système de partage d'une clé de chiffrement/déchiffrement d'informations entre un émetteur (1) et au moins un récepteur (2, 3, 4) pour la mise en oeuvre d'un procédé selon l'une quelconque des revendications précédentes, **caractérisé en ce qu'**il comporte :
- des moyens d'établissement dans l'émetteur (1) et ledit au moins un récepteur (2, 3, 4), d'une base de données racine de clé,
- des moyens de génération dans l'émetteur (1) d'une séquence de bits appelée indice,
- des moyens de transmission de cette séquence de bits d'indice par l'émetteur (1) à destination du récepteur (2, 3, 4), et
- des moyens d'extraction par l'émetteur (1) et ledit au moins un récepteur (2, 3, 4), de la clé à partir de l'indice et de la base de données racine de clé.

12. Système de contrôle d'accès à des signaux de télévision à péage, **caractérisé en ce qu'**il comporte au moins un système selon la revendication 11.
